# EUROPÄISCHE PATENTANMELDUNG

(11) **EP 1 870 619 A2**
(43) Veröffentlichungstag der Anmeldung: **26.12.2007**
(21) Anmeldenummer: 07010320.5
(22) Anmeldetag: 24.05.2007
(51) Int. Cl.: F16K 17/04, F16K 17/30

(54) **Sicherheitsabsperrventil für Gasleitungen**

(30) Priorität: 21.06.2006 DE 102006028466
(71) Anmelder: TECO S.r.l., 25040 Camignone Di Passirano (IT)
(72) Erfinder: Colombo, Renato, Borgomanero (Novara) (IT)
(74) Vertreter: Wörz, Volker Alfred

(57) **Zusammenfassung**

Die Erfindung betrifft einen Gasströmungswächter (2) mit einem Ventilkörper (4), der mindestens eine Durchgangsöffnung (36) für durch den Gasströmungswächter (2) strömendes Gas aufweist, mit einem in dem Ventilkörper (4) axial verschiebbar geführten und im Wesentlichen quer zu einer durch den Ventilkörper (4) hindurchführenden Gasströmung angeordneten Absperrkörper (30), der zwischen einer Durchflussstellung (I), in der der Absperrkörper (30) von einem in dem Ventilkörper (4) vorgesehenen Ventilsitz (38) abgehoben ist und die oder jede Durchgangsöffnung (36) freigibt, und einer Dichtstellung (II), in der der Absperrkörper (30) die oder jede Durchgangsöffnung (36) gasdicht verschließt, verschiebbar ist, wobei der Ventilsitz (38) des Ventilkörpers (4) durch ein elastisches Dichtelement (40) gebildet ist, an dem der Absperrkörper (30) in der Dichtstellung (II) des Gasströmungswächters (2) anliegt.

## Beschreibung

Die Erfindung betrifft einen Gasströmungswächter mit einem Ventilkörper, der mindestens eine Durchgangsöffnung für durch den Gasströmungswächter strömendes Gas aufweist, mit einem in dem Ventilkörper axial verschiebbar geführten und im Wesentlichen quer zu einer durch den Ventilkörper hindurchführenden Gasströmung angeordneten Absperrkörper, der zwischen einer Durchflussstellung, in der der Absperrkörper von einem in dem Ventilkörper vorgesehenen Ventilsitz abgehoben ist und die oder jede Durchgangsöffnung freigibt, und einer Dichtstellung, in der der Absperrkörper die oder jede Durchgangsöffnung gasdicht verschließt, verschiebbar ist.

Solche Gasströmungswächter sind bspw. aus der DE 102 02 067 bekannt. Sie werden in Gasleitungen von gasleitenden Anlagen eingebaut und begrenzen die Gasströme durch die Gasleitungen auf maximale Werte. Die Gasströmungswächter sind in üblicher Weise für einen vorgebbaren Nenndurchfluss, bei dem sich der Absperrkörper in der Durchflussstellung befindet, ausgelegt. Bei einem etwa 10% bis 30% oberhalb des Nenndurchflusses liegenden Schließdurchfluss wird der Absperrkörper in die Dichtstellung bewegt und die entsprechende Gasleitung abgesperrt. Wird eine gasleitende Anlage in unzulässiger Weise manipuliert, z.B. durch unbeabsichtigtes Offenlegen einer Gasleitung, kann ein für die Umgebung gefährlicher Austritt des Gases verhindert werden, indem der Absperrkörper durch die erhöhte Gasströmung aus seiner Durchflussstellung in seine Dichtstellung bewegt wird.

Unter der Bezeichnung Mertik-Maxitrol ist aus der DE 4 344 575 A1 ein Gasströmungswächter der Firma Maxitrol, 23555 Telegraph Road, Southfield, Michigan 48037, USA bekannt, der einen Ventilkörper und einen darin einsetzbaren Ventileinsatz aufweist. Der Ventileinsatz umfasst Führungsmittel, durch die ein scheibenförmiger Absperrkörper zwischen einer Durchflussstellung und einer Dichtstellung verschiebbar geführt ist. Der Absperrkörper wird durch ein als Druckfeder ausgebildetes Halteelement in der Durchflussstellung gehalten.

Die Druckfedern weisen sehr große Toleranzen auf, die ihre Ursache in dem verwendeten Material der Druckfeder und dem Herstellungsverfahren haben. Die Toleranzen der Druckfedern sind um einiges größer als die erlaubten Toleranzen der Gasströmungswächter. Um trotz dieser Toleranzen der Druckfedern sicherstellen zu können, dass ein Gasströmungswächter bei einem vorgegebenen Nenndurchfluss auch tatsächlich offen ist und bei einem vorgegebenen Schließdurchfluss auch tatsächlich schließt, muss jeder einzelne Gasströmungswächter nach der Herstellung kalibriert werden.

Beim Kalibrieren eines Gasströmungswächters wird eine durch die Gasströmung auf den Absperrkörper wirkende Kraft simuliert und die Druckfeder so vorgespannt, dass die resultierende Federkraft der simulierten Kraft die Waage hält, so dass der Absperrkörper in der Durchflussstellung (zum Kalibrieren auf einen vorgegebenen Nenndurchfluss) bzw. in der Dichtstellung (zum Kalibrieren auf einen vorgegebenen Schließdurchfluss) gehalten wird.

Hierbei ist problematisch, dass eine optimale Kalibrierung des Gasströmungswächters von dessen Einbaulage abhängig ist. Wird der Gasströmungswächter beispielsweise auf einen vorgegebenen Nenndurchfluss für eine horizontale Gasströmungsrichtung kalibriert, ergeben sich für vertikal eingebaute Gasströmungswächter unerwünschte Abweichungen vom Nenndurchfluss. Wird der für horizontale Gasströmungsrichtungen kalibrierte Gasströmungswächter beispielsweise so eingebaut, dass dieser in vertikaler Richtung von unten nach oben mit Gas durchströmt wird, muss für die Bewegung des Absperrkörpers in die Dichtstellung auch dessen Eigengewicht überwunden werden. Dies bedeutet, dass der Gasströmungswächter erst bei gegenüber dem kalibrierten Wert erhöhten Strömungswerten schließt.

Wenn der für horizontale Gasströmungsrichtungen kalibrierte Gasströmungswächter so eingebaut wird, dass dieser in vertikaler Richtung von oben nach unten mit Gas durchströmt wird, wird der Absperrkörper bedingt durch sein Eigengewicht bereits teilweise in Richtung Dichtstellung gebracht. Dies hat zur Folge, dass der Gasströmungswächter bereits bei gegenüber dem kalibrierten Wert gesenkten Strömungswerten schließt.

Entsprechendes gilt für einen Gasströmungswächter, der für eine der möglichen vertikalen Einbaulagen kalibriert ist und dann in horizontaler Einbaulage oder im ungünstigsten Fall in der anderen der möglichen vertikalen Einbaulagen verbaut wird.

Nun ist es möglich, für jede mögliche Einbaulage entsprechend kalibrierte Gasströmungswächter bereitzustellen. Die hierfür erforderliche Logistik ist jedoch aufwändig und teuer.

Der vorliegenden Erfindung liegt hiervon ausgehend die Aufgabe zugrunde, einen Gasströmungswächter der eingangs genannten Art dahingehend weiterzubilden, dass der Gasströmungswächter weitestgehend unabhängig von seiner Einbaulage kalibriert werden kann.

Diese Aufgabe wird erfindungsgemäß dadurch gelöst, dass der Ventilsitz des Ventilkörpers durch ein elastisches Dichtelement gebildet ist, an dem der Absperrkörper in der Dichtstellung des Gasströmungswächters anliegt. Dies ermöglicht es, einen besonders leichten Absperrkörper bereitzustellen, so dass sich die gewichtsbedingten Einflüsse, die sich aus der Einbaulage des Gasströmungswächters ergeben, minimieren. Durch die Elastizität des Dichtelements ist gewährleistet, dass auch der leichtgewichtige Absperrkörper die Durchgangsöffnung zuverlässig verschließen kann.

Dadurch, dass das elastische Dichtelement an dem Ventilsitz und nicht an dem Absperrkörper angeordnet ist, können im Bereich des Absperrkörpers zur Fixierung eines dort angeordneten Dichtelements benötigte Lagerabschnitte entfallen, so dass weiteres Gewicht eingespart werden kann. Hierdurch ist es möglich, den Gasströmungswächter unabhängig von seiner Einbaulage zu kalibrieren, ohne dass sich im eingebauten Zustand des Gasströmungswächters nennenswerte Abweichungen von dem kalibrierten Nennwert ergeben.

Nach einer Weiterbildung der Erfindung ist das elastische Dichtelement durch einen O-Ring gebildet. Dieser ist mechanisch stabil, bei Auswahl eines geeigneten Werkstoffs weitestgehend medienresistent und zudem verformbar, so dass eine zuverlässige Abdichtung im Bereich des Ventilsitzes erreicht wird.

Nach einer bevorzugten Weiterbildung der Erfindung ist vorgesehen, dass in der Dichtstellung des Gasströmungswächters zumindest Abschnitte des Absperrkörpers und des Ventilsitzes konzentrisch zueinander angeordnet sind. Dies bedeutet, dass der Absperrkörper und das den Ventilsitz bildenden Dichtelement nicht nur aneinander anliegen, sondern einander überlappen. Auf diese Weise entsteht ein vergleichsweise breiter, ringförmiger Dichtbereich, wodurch die Dichtwirkung weiter verbessert wird.

Es wird ferner vorgeschlagen, dass der Absperrkörper entlang seines Umfangs eine dem Profil des elastischen Dichtelements angepasste Dichtfläche aufweist. Auf diese Weise können sich die Dichtfläche des Absperrkörpers und das elastische Dichtelement in der Dichtstellung des Gasströmungswächters aneinander anlegen und einen breiten Dichtbereich bereitstellen.

Um weiteres Gewicht einzusparen, wird vorgeschlagen, dass der Absperrkörper mindestens eine zu der Dichtfläche nach radial innen versetzt angeordnete Materialausnehmung aufweist. Somit kann der Absperrkörper mit einer vergleichsweise großen Dichtfläche ausgestattet sein und dennoch besonders leicht bauen.

Für eine zuverlässige Fixierung des elastischen Dichtelements wird vorgeschlagen, dass der Ventilkörper eine Ringnut aufweist, in der das elastische Dichtelement aufgenommen ist. Auf diese Weise ist das Dichtelement unabhängig von der Einbaulage des Gasströmungswächters zuverlässig fixiert.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel im Einzelnen beschrieben ist. Dabei können die in der Zeichnung gezeigten sowie in den Ansprüchen sowie in der Beschreibung erwähnten Merkmale jeweils einzeln für sich oder in beliebiger Kombination erfindungswesentlich sein. In der Zeichnung zeigt:

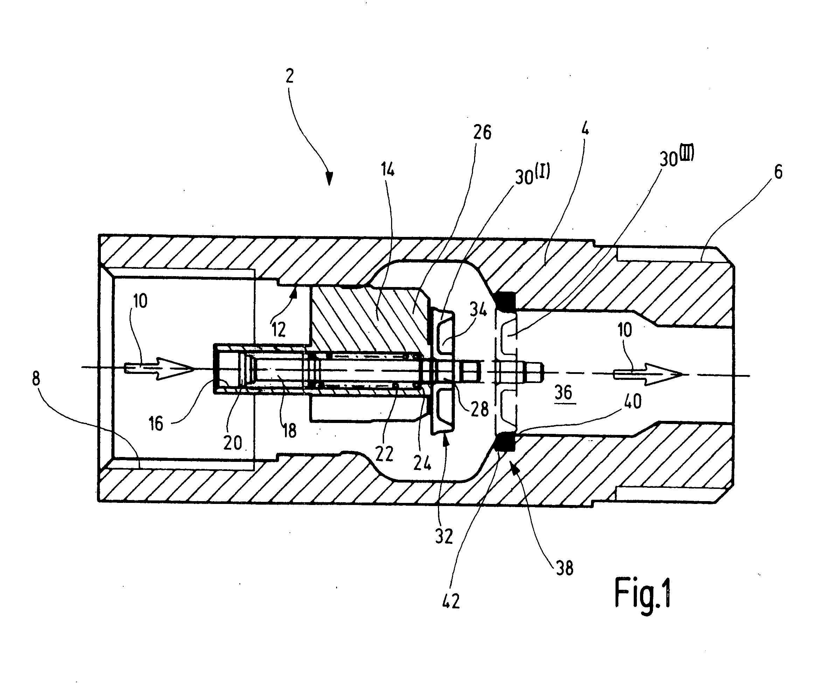

- Figur 1: eine geschnittene Seitenansicht eines erfindungsgemäßen Gasströmungswächters.

In Figur 1 ist ein Gasströmungswächter insgesamt mit dem Bezugszeichen 2 bezeichnet. Dieser weist einen rohrförmigen Ventilkörper 4 auf, der über endseits angeordnete Gewindeabschnitte 6 bzw. 8 mit benachbarten Gasleitungen verbunden werden kann.

Der Gasströmungswächter 2 wird in mit 10 bezeichneter Richtung von Gas durchströmt. Im Bereich einer Wandung 12 des Ventilkörpers 4 ist ein Einsatz 14 angeordnet, der mit dem Ventilkörper 4 verbunden ist. Der Einsatz 14 weist eine im Wesentlichen koaxial zu dem Ventilkörper 4 angeordnete hohlzylindrische Aufnahme 16 auf. In dieser ist ein Stift 18 geführt, der an seinem der Strömungsrichtung 10 entgegengesetzten Ende eine Schulter 20 aufweist. Die Schulter 20 dient zur Aufnahme von Druckkräften, die durch eine Druckfeder 22 ausgeübt werden. Die Druckfeder 22 stützt sich an ihrem der Schulter 20 abgewandten Ende an einen innerhalb des Einsatzes 14 ausgebildeten Anschlag 24 ab.

Der Stift 18 durchsetzt eine in dem Einsatz 14 ausgebildete Öffnung 26 und ist über einen Klemmsitz 28 mit einem scheibenförmigen Absperrkörper 30 verbunden.

Der Absperrkörper 30 weist entlang seines Umfangs eine nach radial außen weisende Dichtfläche 32 auf. Radial nach innen versetzt zu dieser Dichtfläche 32 sind in dem Absperrkörper 30 Materialausnehmungen 34 vorgesehen, wodurch das Gewicht des Absperrkörpers 30 minimiert wird.

Dem Absperrkörper 30 ist in Strömungsrichtung 10 eine Durchgangsöffnung 36 nachgeschaltet. Im Bereich dieser Durchgangsöffnung 36 ist ein insgesamt mit 38 bezeichneter Ventilsitz vorgesehen. Dieser wird durch ein als O-Ring ausgebildetes elastisches Dichtelement 40 gebildet. Dieses ist in einer in dem Ventilkörper 4 ausgebildeten Ringnut 42 aufgenommen.

Der Gasströmungswächter 2 kann auf einen Nenndurchfluss kalibriert werden, indem der Absperrkörper 30 zunächst gegenüber dem Stift 18 beweglich ist. Wird nun auf den Stift 18 eine Kraft ausgeübt, die einem Strömungsnennwert entspricht, wird der Stift 18 entgegen der Wirkung der Druckfeder 22 in Strömungsrichtung 10 verschoben. Wenn sich die ausgeübte Kraft und die Wirkung der Druckfeder 22 die Waage halten, kann der Absperrkörper 30 in der in Figur 1 mit I bezeichneten Position an dem Stift 18 festgeklemmt werden. Wenn der Gasströmungswächter 2 nun eingebaut wird und einer unzulässig hohen Gasströmung ausgesetzt wird, wirkt diese Gasströmung auf den Absperrkörper 30 eine Kraft aus, so dass er aus seiner Durchflussstellung I in seine Dichtstellung II bewegt wird. Hierbei kommt die Dichtfläche 32 des Absperrkörpers 30 in dichtenden Eingriff mit dem elastischen Dichtelement 40, das den ortsfesten Ventilsitz 38 bildet.

Durch die Anordnung des elastischen Dichtelements 40 an dem Ventilkörper 4 baut der Absperrkörper 30 besonders leicht. Hierdurch werden die Gewichtseinflüsse des Absperrkörpers 30 verringert, so dass der Gasströmungswächter 2 für alle Einbaulagen identisch kalibriert werden kann.

## Patentansprüche

1. Gasströmungswächter (2) mit einem Ventilkörper (4), der mindestens eine Durchgangsöffnung (36) für durch den Gasströmungswächter (2) strömendes Gas aufweist, mit einem in dem Ventilkörper (4) axial verschiebbar geführten und im Wesentlichen quer zu einer durch den Ventilkörper (4) hindurchführenden Gasströmung angeordneten Absperrkörper (30), der zwischen einer Durchflussstellung (I), in der der Absperrkörper (30) von einem in dem Ventilkörper (4) vorgesehenen Ventilsitz (38) abgehoben ist und die oder jede Durchgangsöffnung (36) freigibt, und einer Dichtstellung (II), in der der Absperrkörper (30) die oder jede Durchgangsöffnung (36) gasdicht verschließt, verschiebbar ist, **dadurch gekennzeichnet, dass** der Ventilsitz (38) des Ventilkörpers (4) durch ein elastisches Dichtelement (40) gebildet ist, an dem der Absperrkörper (30) in der Dichtstellung (II) des Gasströmungswächters (2) anliegt.

2. Gasströmungswächter (2) nach Anspruch 1, **dadurch gekennzeichnet, dass** das elastische Dichtelement (40) durch einen O-Ring gebildet ist.

3. Gasströmungswächter (2) nach Anspruch 1 oder 2, **dadurch gekennzeichnet, dass** in der Dichtstellung (II) des Gasströmungswächters (2) zumindest Abschnitte des Absperrkörpers (20) und des Ventilsitzes (38) konzentrisch zueinander angeordnet sind.

4. Gasströmungswächter (2) nach mindestens einem der vorhergehenden Ansprüche, **dadurch gekennzeichnet, dass** der Absperrkörper (30) entlang seines Umfangs eine dem Profil des elastischen Dichtelements (40) angepasste Dichtfläche (32) aufweist.

5. Gasströmungswächter (2) nach Anspruch 4, **dadurch gekennzeichnet, dass** der Absperrkörper (30) mindestens eine zu der Dichtfläche (32) nach radial innen versetzt angeordnete Materialausnehmung (34) aufweist.

6. Gasströmungswächter (2) nach mindestens einem der vorhergehenden Ansprüche, **dadurch gekennzeichnet, dass** der Ventilkörper (4) eine Ringnut (42) aufweist, in der das elastische Dichtelement (40) aufgenommen ist.
